# FASCICULE DE BREVET EUROPEEN

(11) **EP 3 294 827 B1**
(45) Date de publication et mention de la délivrance du brevet: **31.08.2022**
(21) Numéro de dépôt: 16729016.2
(22) Date de dépôt: 11.05.2016
(51) Int. Cl.: C09J 123/08, B32B 27/32, C08L 23/08, C08F 210/02, C08F 220/08, C08F 220/14, B32B 7/12, B32B 15/08, B32B 15/20, B32B 23/08, B32B 27/08, B32B 27/10, B32B 27/30, B32B 27/34, B32B 27/36, B32B 27/38, B32B 29/00, C09J 7/35, C09J 7/22

(54) **COMPOSITION ADHESIVE A BASE DE COPOLYMERES ETHYLENIQUES OBTENU(S) PAR COPOLYMERISATION TUBULAIRE, UTILISABLE POUR L'EXTRUSION-COUCHAGE ET L'EXTRUSION-LAMINATION**
DURCH ROHRCOPOLYMERISIERUNG HERGESTELLTE, AUF ETHYLENCOPOLYMEREN BASIERENDE KLEBSTOFFE ZUR EXTRUSIONSBESCHICHTUNG UND EXTRUSIONSLAMINIERUNG
ADHESIVE COMPOSITION BASED ON ETHYLENE COPOLYMERS OBTAINED BY TUBE COPOLYMERISATION, THAT CAN BE USED FOR EXTRUSION-COATING AND EXTRUSION-LAMINATION

(30) Priorité: 11.05.2015 FR 1554183
(43) Date de publication de la demande: 21.03.2018
(73) Titulaire: SK Geo Centric Co., Ltd., Jongno-gu Seoul (KR)
(72) Inventeur: COCQUET, Clio, 27300 Bernay (FR); LAURENT, Betty, 27170 Barc (FR); MICHALOWICZ, Claire, 27000 Evreux (FR); BODIGUEL, Mathieu, 69004 Lyon (FR); BOUILLOUX, Alain, 27300 Saint-leger De Rotes (FR)
(74) Mandataire: Bandpay & Greuter
(86) Numéro de dépôt international: PCT/FR2016/051112
(87) Numéro de publication internationale: WO 2016/181074

(56) Documents cités:
- WO-A1-2006/064117
- FR-A1- 2 569 412
- GB-A- 991 568

## Description

La présente invention se rapporte à une composition adhésive ou liant à base de un ou plusieurs polymères ou copolymères éthyléniques, ladite composition étant obtenue au moins en partie par polymérisation tubulaire, utilisable dans un procédé d'extrusion-couchage pour application sur un support ou dans un procédé d'extrusion-lamination pour coller entre eux plusieurs supports pouvant être de nature différente ou pas.

Il est connu d'utiliser comme liant d'extrusion-couchage sur un support en aluminium, des copolymères d'éthylène et d'acide (méth)acrylique; toutefois ces copolymères n'adhèrent que sur un nombre limité de supports, et en particulier n'adhèrent pas sur des films plastiques orientés tels que le polyester (OPET), le polypropylène (OPP), ou le polyamide (OPA). Certaines compositions de l'état de la technique adhèrent sur ces différents supports (bonne versatilité) mais alors le niveau d'adhésion se dégrade sensiblement de sorte que la fermeture hermétique requise pour un certain nombre d'emballages n'est pas obtenue.

Le document FR 98 13248 décrit un liant du type terpolymère éthylène/(méth)acrylate d'alkyle/ méthacrylate de glycidyle (GMA) pour coller un film polyester tel que le poly(éthylène téréphtalate) (PET) traité Corona sur un autre substrat tel que polyéthylène (PE) ; toutefois, la polyvalence pour coller sur d'autres substrats est limitée.

Le document EP 444 865 décrit des liants du type scellable-pelable pour couvercles en aluminium d'emballage plastique, dont les compositions comprennent en mélange des copolymères d'éthylène et d'acétate de vinyle (EVA) ou d'éthylène et de (méth)acrylates d'alkyle, avec des terpolymères d'éthylène, d'acide insaturé ou de son anhydride et d'ester insaturé. Ces liants qui doivent être scellables et pelables ne sont pas utilisés comme liants d'extrusion-couchage et d'extrusion-lamination entre un support aluminium et un support thermoplastique.

Le document EP 1 136 536 décrit un liant de coextrusion comprenant :
- 5 à 35 parties d'un polymère (A) lui-même constitué d'un mélange de 80 à 20 parties d'un polyéthylène métallocène (A1) et de 20 à 80 parties d'un polyéthylène LLDPE (A2) non métallocène, le mélange (A1) + (A2) étant cogreffé par un acide carboxylique insaturé,
- 95 à 65 parties d'un polyéthylène (B) choisi parmi les polyéthylènes homo ou copolymères et les élastomères,
le mélange de (A) et (B) étant tel que la teneur en acide carboxylique insaturé greffé est comprise entre 30 et 100 000 ppm.

Ces compositions, très efficaces en coextrusion, sont peu performantes dans les technologies d'extrusion-couchage et extrusion-lamination, sur certains supports tels que le poly(éthylène téréphtalate) orienté (OPET).

Le document EP 222 789 décrit une composition thermoplastique constituée d'un mélange d'un polymère ou copolymère à base d'éthylène et d'un terpolymère éthylène/(méth)acrylate d'alkyle/anhydride maléique; dans les exemples décrivant l'utilisation de cette composition en enduction sur un support en aluminium, le terpolymère est utilisé en mélange avec 15 à 50% en poids d'un polyéthylène radicalaire, ce qui donne des teneurs en anhydride maléique comprises entre 1,4 et 2,5% en poids. Ce type de composition, du fait de sa teneur élevée en anhydride maléique, est très sensible à l'humidité et en outre ses propriétés d'adhésion sur des films en OPET, OPA et OPP sont médiocres.

Le document US 2002/0198323 A1 décrit un mélange polymérique utilisé pour l'enduction à grande vitesse d'un substrat polaire tel qu'une feuille d'aluminium, comprenant du polyéthylène basse densité (LDPE) (au moins 55% en poids) et un copolymère à faible acidité qui est un copolymère d'éthylène et d'acide (méth)acrylique, pouvant contenir de 0 à 20 % en poids d'un autre comonomère éthylèniquement insaturé. De préférence, ce copolymère à faible acidité est un terpolymère éthylène/acide (méth)acrylique/acrylate d'isobutyle, ayant une teneur en ce dernier comonomère comprise entre 1 et 8% en poids du terpolymère, soit au plus 3,6% dans le mélange. Ce type de formulation n'adhère que sur un nombre limité de supports tels que l'aluminium, le papier et le polyéthylène.

Le document WO 2006/064117 décrit une composition adhésive constituée d'au moins un polymère ou copolymère éthylénique, cette composition comprenant au moins un comonomère de type ester d'acides carboxyliques insaturés, et au moins un comonomère fonctionnel utilisable dans un procédé d'extrusion-couchage pour application sur un support ou dans un procédé d'extrusion-lamination pour coller entre eux plusieurs supports de nature différente ou non, caractérisée en ce que ladite composition présente une teneur en comonomère(s) de type ester d'acides carboxyliques insaturés, supérieure à 5% en poids et que le comonomère fonctionnel est constitué d'une fonction réactive sous forme d'un groupe acide, anhydride ou époxyde dont le taux est inférieur à 1% en poids de la composition. Ces formulations présente une bonne versatilité (un grand nombre de supports peuvent être utilisés avec cette composition), cependant, les niveaux d'adhésion obtenus sont parfois insuffisants sur certains type de supports et notamment sur les supports imprimés et les températures d'extrusion nécessaires pour atteindre ces adhésions sont élevées.

Il n'existe pas à l'heure actuelle une composition pour le scellage, destinée à être utilisée en extrusion-couchage et/ou extrusion-lamination, à la fois parfaitement versatile (capable d'adhérer sur tous types de supports ou quasiment tous supports) et présentant un excellent niveau d'adhésion (nécessaire pour les scellages hermétiques).

La demanderesse a découvert, de façon surprenante, qu'il était possible d'améliorer de façon importante les propriétés d'adhésion d'une composition adhésive ou liant, constituée d'au moins un polymère ou copolymère éthylénique combinant à la fois une faible teneur en fonction réactive, qui est de type acide, anhydride, ou époxyde, notamment dans une matrice oléfinique, et une teneur suffisante en comonomères d'ester d'acides carboxyliques insaturés, appliquée sur un support par un procédé d'extrusion-couchage ou pour coller entre eux des supports de nature différente et variée, par un procédé d'extrusion-lamination, en polymérisant au moins l'un ou l'autre des composants dans un réacteur tubulaire.

Les avantages d'une telle composition sont, outre la polyvalence de l'adhésion quel que soit le type de supports, la possibilité d'utilisation dans une large gamme de température entre 220 et 330°C et à des vitesses élevées de mise en œuvre, l'insensibilité à la reprise d'humidité ainsi que le taux réduit d'odeur émise, tant lors de son utilisation que sur les produits finis, ainsi que l'obtention d'un excellent niveau d'adhésion sur le support, quel que soit le support considéré.

La présente invention concerne une composition adhésive constituée d'au moins un polymère ou copolymère éthylénique, cette composition comprenant au moins un comonomère de type ester d'acides carboxyliques insaturés, et au moins un comonomère fonctionnel, notamment utilisable dans un procédé d'extrusion-couchage pour application sur un support ou dans un procédé d'extrusion-lamination pour coller entre eux plusieurs supports de nature différente ou non, dans une large gamme de température, notamment entre 220 et 330°C, ladite composition présentant une teneur en comonomère de type ester d'acides carboxyliques insaturés, entre à 5% et 25% en poids et que le comonomère fonctionnel est constitué d'au moins une fonction réactive sous forme d'un groupe acide, anhydride ou époxyde dont le taux est inférieur à 2% en poids de la composition, caractérisée en ce qu'au moins un premier polymère ou copolymère comprenant le comonomère de type ester d'acides carboxyliques insaturés est copolymérisé dans un réacteur tubulaire haute pression continu, tandis qu'un second ou deuxième polymère ou copolymère comprenant le comonomère fonctionnel est copolymérisé par voie radicalaire haute pression, soit autoclave soit tubulaire ; le premier et second susdit polymère ou copolymère pouvant consister en un seul et même polymère/copolymère.

L'invention concerne également, une composition adhésive comprenant au moins un premier copolymère, lequel premier copolymère comprend, ou est constitué de :
- comonomères éthylène, notamment une majorité de comonomères éthylène, et
- comonomères de type ester d'acides carboxyliques insaturés, et éventuellement
- comonomères fonctionnels comprenant au moins une fonction réactive sélectionnée dans le groupe constitué d'une fonction acide, d'une fonction anhydride ou d'une fonction époxyde,
ladite composition comprenant entre 5% et 25% en poids desdits comonomères de type ester d'acides carboxyliques insaturés par rapport au poids de ladite composition et, lorsque les comonomères fonctionnels sont présents, moins de 2% en poids desdits comonomères fonctionnels par rapport au poids de ladite composition
et dans laquelle, le premier copolymère est obtenu par copolymérisation dans un réacteur tubulaire haute pression continu.

De préférence, la composition selon l'invention est utilisable dans un procédé d'extrusion-couchage pour application sur un support ou dans un procédé d'extrusion-lamination pour coller entre eux plusieurs supports de nature différente ou non, dans une large gamme de température, notamment entre 220 et 330°C.

Comme on l'entend ici, l'expression « polymère ou copolymère éthylénique » désigne un polymère ou un copolymère à base de monomères ou de comonomères éthylène, notamment à base d'une majorité de monomères ou de comonomères éthylène. Le terme « majorité » indique qu'au moins 50% en poids des monomères ou des comonomères constitutifs du polymère ou du copolymère par rapport au poids de la composition sont des monomères ou des comonomères éthylène.

Comme on l'entend ici, et sauf si indications contraires, les indications de taux, de teneur ou de quantité en comonomères, polymérisés ou non, de la composition ou du polymère/copolymère exprimés en % en poids sont rapportées au poids de la composition, indépendamment du nombre de copolymères présents dans la composition. L'expression « % en poids » désigne ainsi un rapport masse/masse qui peut être exprimé en « g / 100 g ».

Au sens de la présente invention, on entend par « comonomère » ou « monomère » indifféremment les sous-unités constitutives d'un copolymère ou d'un polymère avant et après polymérisation.

L'invention concerne également, une composition adhésive telle que définie ci-dessus, comprenant au moins un deuxième copolymère mélangé au premier copolymère, lequel deuxième copolymère comprend, ou est constitué de :
- comonomères éthylène, notamment une majorité de comonomères éthylène, et
- comonomères de type ester d'acides carboxyliques insaturés, et
- comonomères fonctionnels comprenant au moins une fonction réactive sélectionnée dans le groupe constitué d'une fonction acide, d'une fonction anhydride ou d'une fonction époxyde.

Le deuxième copolymère peut être obtenu par voie radicalaire haute pression continue, soit autoclave soit tubulaire.

On entend par « deuxième copolymère », un copolymère différent du premier copolymère.

De préférence, lorsque la composition selon la présente invention comprend un deuxième copolymère, le premier copolymère ne comprend pas de comonomère fonctionnel comprenant au moins une fonction réactive sélectionnée dans le groupe constitué d'une fonction acide, d'une fonction anhydride ou d'une fonction époxyde.

De préférence, lorsque la composition selon la présente invention comprend un second ou un deuxième polymère ou copolymère, le ratio entre le premier et le second ou deuxième polymère ou copolymère respectivement est compris entre 99 :1 et 10 :90 , plus préférentiellement entre 98 :2 et 40 :60.

Dans un mode de réalisation particulier de l'invention, lorsque la composition selon la présente invention comprend un deuxième polymère tel que défini ci-dessus, alors le premier copolymère comprend des comonomères fonctionnels.

Préférablement, le premier copolymère et éventuellement le deuxième copolymère sont mélangés par extrusion.

Comme l'homme du métier le comprendra, la composition selon l'invention peut notamment être une résine.

Il est entendu ici que la demanderesse a conduit un grand nombre d'expérimentations afin de déterminer la limite inférieure du comonomère de type ester d'acides carboxyliques insaturés devant être présent dans la composition, à savoir 5 %, ainsi que les domaines préférés présentés ci-après. Ainsi notamment, au-delà de la limite inférieure définie ci-dessus, l'adhésion de la composition chute très significativement.

De la même manière, la demanderesse a constaté après diverses expérimentations qu'au-delà de 2 % en poids de la composition de comonomère fonctionnel, plus précisément de la fonction réactive de ce dernier, aucun gain en adhésion ou en versatilité n'était obtenu (sans par ailleurs noté une dégradation au niveau des propriétés physico-chimique ou de la processabilité) de sorte qu'il n'est pas opportun d'utiliser une quantité supérieure en fonction réactive, notamment pour des raisons économiques.

D'autres caractéristiques ou modes préférés selon l'invention sont présentés dans la suite :
- selon une possibilité offerte par l'invention, le susdit premier et second ou deuxième polymères ou copolymères sont obtenus par copolymérisation de leurs monomères dans un réacteur tubulaire haute pression continu. Dans ce cas, le premier et second ou deuxième polymères peuvent soit consister en un seul et même polymère/copolymère soit consister en deux polymères/copolymères distincts ;
- de préférence, la teneur en fonction(s) réactive(s) est comprise entre 0,05% et 0,9% en poids par rapport à ladite composition ;
- de préférence, ladite composition comprend moins de 1% en poids de comonomères fonctionnels par rapport au poids de ladite composition ;
- de préférence également, ladite composition comprend de 0,05% à 0,9% en poids de comonomères fonctionnels par rapport au poids de ladite composition;
- de préférence, le comonomère de type ester d'acides carboxyliques est choisi parmi les (méth)acrylates d'alkyle, le groupe alkyle comprenant de 1 à 24 atomes de carbone ;
- de préférence, le comonomère de type ester d'acides carboxyliques insaturés est choisi dans le groupe constitué par : les acrylates d'alkyle et les méthacrylates d'alkyle, le groupe alkyle comprenant de 1 à 24 atomes de carbone;
- avantageusement, le comonomère fonctionnel est choisi parmi les anhydrides d'acides carboxyliques insaturés, et en particulier est l'anhydride maléique ;
- de préférence, la teneur en anhydride maléique est comprise entre 0,15% et 0,6% en poids de la composition ;
- avantageusement, la teneur en comonomère de type (méth)acrylate d'alkyle est comprise entre 10 et 25% en poids de la composition ;
- de préférence, la teneur en comonomère de type (méth)acrylate d'alkyle est comprise entre 15 et 25% en poids de la composition ;
- de préférence, la composition comprend ou est constituée de 15% à 25% en poids de comonomères de type ester d'acides carboxyliques insaturés par rapport au poids de ladite composition;
- de préférence, la fonction réactive est présente à un taux inférieur à 1 % en poids de la composition.
- de préférence, le premier copolymère présente au moins 5%, de préférence entre 10% et 40%, et encore préférentiellement entre 15 et 25% en poids desdits comonomères de type ester d'acides carboxyliques insaturés par rapport au poids total dudit premier copolymère,
- de préférence, le deuxième copolymère comprend au moins 5%, de préférence entre 10% et 40%, et encore préférentiellement entre 15 et 25% en poids desdits comonomères de type ester d'acides carboxyliques insaturés par rapport au poids total dudit premier copolymère.
- de préférence, le copolymère ayant des comonomères fonctionnels comprenant au moins une fonction réactive sélectionnée dans le groupe constitué d'une fonction acide, d'une fonction anhydride ou d'une fonction époxyde, par rapport au poids total dudit premier copolymère, qu'il s'agisse du premier ou du deuxième copolymère, comprend entre 0,5% et 10%, et encore préférentiellement entre 1 et 6% en poids desdits comonomères fonctionnels,
- de préférence, lorsque la composition selon l'invention comprend un premier et un deuxième copolymères, ceux-ci comprennent des proportions équivalentes en poids de comonomères éthylène par rapport au poids de la composition.
- de préférence, lorsque la composition selon l'invention comprend un premier et un deuxième copolymères, ceux-ci comprennent des proportions équivalentes en poids de comonomères de type ester d'acides carboxyliques insaturés par rapport au poids de la composition.

De préférence, on entend par « proportions équivalentes en poids » des écarts de moins de 20%, de préférence de moins de 10% en poids par rapport au poids de la composition.

La polymérisation ou copolymérisation de monomères dans un réacteur tubulaire haute pression continu conduit à un polymère ou copolymère présentant des propriétés physico-chimiques particulières, différentes selon la nature des monomères considérés, de sorte que la définition d'un composant par ce mode d'obtention définit au mieux ce dernier, sans qu'il soit nécessaire et même possible de définir ce composant à l'aide d'une autre caractéristique ou propriété.

La technique de polymérisation ou copolymérisation tubulaire est bien connue de l'homme du métier. A titre indicatif et non limitatif, le document EP 1453674 décrit une copolymérisation dans un réacteur tubulaire continu qui pourra être utilisée pour obtenir un copolymère à partir de comonomères fonctionnels et/ou de comonomères de type ester d'acides carboxyliques insaturés.

De la même manière, la définition d'une polymérisation radicalaire haute pression relativement à un polymère ou un copolymère définit sa nature, ses caractéristiques et/ou propriétés physico-chimiques.

De préférence, la copolymérisation dans le réacteur tubulaire haute pression continue est réalisée à une température comprise entre 190 et 260°C, de préférence entre 200 et 250°C, et encore préférentiellement entre 210 et 240°C.

De préférence, la copolymérisation dans un réacteur tubulaire haute pression continue est réalisée à une pression comprise entre 1500 et 3000 bars, de préférence entre 1700 et 2800 bars, et encore préférentiellement entre 2000 et 2500 bars.

Le ou les copolymères éthyléniques de la composition selon l'invention, notamment le premier ou le deuxième copolymère, peuvent être dilués dans un homopolymère ou un copolymère du polyéthylène, tel que notamment du polyéthylène basse densité, du polyéthylène linéaire basse densité, du polyéthylène très basse densité, ou du polyéthylène métallocène, ce qui conduit à une diminution des caractéristiques adhésives des compositions ainsi obtenues ; cependant, ces caractéristiques adhésives restent suffisantes pour le couchage ou la lamination sur certains supports envisagés.

De préférence, la composition adhésive est caractérisée en ce que le comonomère fonctionnel est choisi parmi les groupes acide, anhydride ou époxyde.

De préférence, le groupe fonctionnel est choisi parmi les composés d'acides carboxyliques ou de leurs dérivés anhydride d'acides carboxyliques insaturés.

Des exemples d'anhydrides d'acide dicarboxylique insaturé sont notamment l'anhydride maléique, l'anhydride itaconique, l'anhydride citraconique, l'anhydride tétrahydrophtalique. De préférence, c'est l'anhydride maléique qui est utilisée.

Toutefois, le comonomère fonctionnel peut comprendre une fonction du type époxyde insaturé.

Des exemples d'époxydes insaturés sont notamment :
- les esters et éthers de glycidyle aliphatiques tels que l'allylglycidyléther, le vinylglycidyléther, le maléate et l'itaconate de glycidyle, l'acrylate et le méthacrylate de glycidyle (GMA) et
- les esters et éthers de glycidyle alicycliques tels que le 2-cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocis-bicyclo(2,2,1)-5-heptène-2,3-diglycidyl dicarboxylate.

Des fonctions de type acide mono ou dicarboxylique insaturé tel que l'acide (méth)acrylique peuvent aussi être utilisées.

De préférence, le comonomère fonctionnel est choisi parmi les anhydrides d'acides carboxyliques insaturés, et de préférence est l'anhydride maléique.

L'invention concerne également l'utilisation d'une composition adhésive telle que définie dans la revendication 13, pour la préparation d'une structure multicouche, ladite structure multicouche comprenant de préférence au moins une couche d'un support.

L'invention concerne également une structure multicouche comprenant :
- au moins une couche d'une composition adhésive telle que définie dans la revendication 14, et
- au moins une couche d'un support.

De préférence, la structure multicouche selon l'invention comprend une pluralité d'alternances d'une couche de composition adhésive telle que définie dans la revendication 14 et d'une couche de support.

De préférence, le support tel que défini ci-dessus est sélectionné dans le groupe constitué d'aluminium, de papier, de carton, de cellophane, de films à base de résines polyéthylène, polypropylène, polyamide, polyester, chlorure de polyvinyle (PVC), chlorure de polyvinylidène (PVDC) et polyacrylonitryle (PAN), ces films étant orientés ou non, métallisés ou non, imprimés ou non, traités ou non par voie physique ou chimique, et de films revêtus d'une fine couche barrière inorganique, tels que le polyester (PET SiOx ou AlOx).

Selon un autre mode de réalisation, l'invention concerne une structure multicouches obtenue par utilisation de la composition adhésive susvisée, dans un procédé d'extrusion-couchage pour application sur un support, caractérisée en ce que ledit support est choisi parmi l'aluminium, le papier ou carton, la cellophane, les films à base de résines polyéthylène, polypropylène, polyamide, polyester, chlorure de polyvinyle (PVC), chlorure de polyvinylidène (PVDC), polyacrylonitryle (PAN), ces films étant orientés ou non, métallisés ou non, imprimés ou non, traités ou non par voie physique ou chimique, et les films revêtus d'une fine couche barrière inorganique, tels que le polyester (PET SiOx ou AlOx).

Selon un autre mode de réalisation, l'invention concerne une structure multicouches obtenue par utilisation de la composition adhésive susvisée, dans un procédé d'extrusion-lamination pour coller entre eux plusieurs supports de nature différente ou non, caractérisée en ce que ces supports sont choisis parmi l'aluminium, le papier ou carton, la cellophane, les films à base de résines polyéthylène, polypropylène, polyamide, polyester, chlorure de polyvinyle (PVC), chlorure de polyvinylidène (PVDC), polyacrylonitryle (PAN), ces films étant orientés ou non, métallisés ou non, imprimés ou non, traités ou non par voie physique ou chimique, et les films revêtus d'une fine couche barrière inorganique, tels que le polyester (PET SiOx ou AlOx).

L'invention concerne également un procédé de préparation d'une composition telle que décrite ci-dessus adhésive, comprenant une étape a) de copolymérisation dans un réacteur tubulaire haute pression continue de :
- comonomères éthylène, et
- comonomères de type ester d'acides carboxyliques insaturés, et éventuellement
- comonomères fonctionnels comprenant au moins une fonction réactive sélectionnée dans le groupe constitué d'une fonction acide, d'une fonction anhydride ou d'une fonction époxyde.

Selon un mode de réalisation particulier, ledit procédé comprend en outre une étape b) de copolymérisation d'un deuxième copolymère, de préférence par voie radicalaire haute pression continue, soit autoclave, soit tubulaire, de :
- comonomères éthylène, et
- comonomères de type ester d'acides carboxyliques insaturés, et
- comonomères fonctionnels, ledits comonomères fonctionnels comprenant au moins une fonction réactive sélectionnée dans le groupe constitué d'une fonction acide, d'une fonction anhydride ou d'une fonction époxyde.

Ladite composition comprend entre 5% et 25% en poids desdits comonomères de type ester d'acides carboxyliques insaturés par rapport au poids de ladite composition et, lorsque les comonomères fonctionnels sont présents, moins de 2% en poids des comonomères fonctionnels par rapport au poids de ladite composition.

De préférence, l'ensemble des comonomères comprend au moins 5% en poids de comonomères de type ester d'acides carboxyliques insaturés par rapport au poids total de comonomères et, lorsque les comonomères fonctionnels sont présents, moins de 2% en poids des comonomères fonctionnels par rapport au poids total desdits monomères.

On entend par « ensemble des comonomères », lorsque le procédé ne comprend pas d'étape b), les comonomères éthylène, les comonomères de type ester d'acides carboxyliques insaturés, et éventuellement les comonomères fonctionnels, présents à l'étape a) de copolymérisation, et lorsque le procédé comprend une étape b), les comonomères éthylène, les comonomères de type ester d'acides carboxyliques insaturés, et éventuellement les comonomères fonctionnels, présents à l'étape a) et à l'étape b).

Ainsi, de préférence, dans le procédé selon l'invention, au moins 5% en poids de comonomères de type ester d'acides carboxyliques insaturés par rapport au poids total de comonomères et/ou, lorsque les comonomères fonctionnels sont présents, moins de 2% en poids des comonomères fonctionnels par rapport au poids total desdits monomères sont polymérisés, c'est-à-dire sont soumis à l'étape a) et éventuellement b).

De préférence, l'étape de copolymérisation dans le réacteur tubulaire haute pression continue est réalisée à une température comprise entre 190 et 260°C, de préférence entre 200 et 250°C, et encore préférentiellement entre 210 et 240°C.

De préférence, l'étape de copolymérisation dans un réacteur tubulaire haute pression continue est réalisée à une pression comprise entre 1500 et 3000 bars, de préférence entre 1700 et 2800 bars, et encore préférentiellement entre 2000 et 2500 bars.

De préférence, l'étape de copolymérisation haute pression continue autoclave est réalisée à une température comprise entre 170 et 240°C, de préférence entre 180 et 230°C, et encore préférentiellement entre 190 et 220°C.

De préférence, l'étape de copolymérisation dans un réacteur tubulaire haute pression continue est réalisée à une pression comprise entre 1000 et 2600 bars, de préférence entre 1300 et 2300 bars, et encore préférentiellement entre 1600 et 2000 bars.

Dans le cas où ladite composition comprend au moins deux copolymères, la composition comprend entre 5% et 25%en poids du comonomère de type ester d'acides carboxyliques insaturés par rapport au poids de ladite composition et moins de 2% en poids du comonomère fonctionnel par rapport au poids de ladite composition, ces proportions prenant en compte le premier et le second ou deuxième copolymères. Par ailleurs, le ratio entre le premier et le second ou deuxième polymère ou copolymère est de préférence compris entre 99 :1 et 10 :90, plus préférentiellement entre 98 :2 et 40 :60.

De préférence, le procédé selon la présente invention comprend en outre une étape de mélange par extrusion dudit premier copolymère et éventuellement dudit deuxième copolymère.

En outre, l'invention concerne également un procédé d'obtention de la composition adhésive susvisée, caractérisé en ce qu'il consiste en la polymérisation radicalaire tubulaire haute pression continue en une seule étape de tous les comonomères.

La composition adhésive de l'invention peut contenir en outre d'autres additifs, tels que des agents anti-bloquants, glissants, antioxydants, des charges, des pigments, des colorants et des agents dits « processing aid », pour faciliter la mise en œuvre de cette composition en extrusion-couchage ou extrusion-lamination. Certains de ces additifs peuvent être introduits dans la composition sous forme de mélanges-maîtres.

Plus précisément, chacune des couches de la structure multicouche selon l'invention peut comprendre les additifs habituels incluant les plastifiants, les stabilisants, les antioxydants, les agents d'absorption du rayonnement ultraviolet, les stabilisants hydrolytiques, les agents antistatiques, les colorants ou les pigments, les charges, les produits ignifuges, les lubrifiants, les agents glissants, les agents antibloquants, les agents de renfort tels que la fibre de verre et les flocons, les auxiliaires de transformation, par exemple les agents de démoulage, et/ou les mélanges de ceux-ci.

La structure multicouche selon l'invention peut être préparée par revêtement par extrusion (extrusion-couchage ou extrusion-lamination), coextrusion avec les autres couches, sur une première couche. Dans un autre mode de réalisation de l'invention, le stratifié peut être préparé par la coextrusion d'une première et d'une seconde couche et éventuellement des couches supplémentaires. Il est de préférence préparé par revêtement par extrusion.

Le procédé de revêtement par extrusion est bien connu de l'homme du métier, néanmoins à titre d'exemple non limitatif, une présentation de cette technique est donnée ci-après.

Le procédé de revêtement par extrusion permet de revêtir un substrat avec des couches polymères en un état fondu. Les polymères sous la forme de pastilles sont transportés dans la trémie des extrudeuses. Les extrudeuses fondent le polymère et développent une certaine pression pour le forcer à travers une filière. La masse fondue des différents polymères se fond dans le bloc d'alimentation ou directement dans la filière plate. Les conduites de production d'enrobage par coextrusion ont habituellement deux ou trois extrudeuses qui fournissent les masses fondues de polymère au niveau de la même filière. Le flux fondu quittant la filière est étiré par deux cylindres formant l'écartement : un cylindre refroidisseur et un cylindre revêtu de caoutchouc. L'épaisseur totale des polymères dans l'écartement est typiquement comprise entre 15 microns et 50 microns. Le polymère est pressé sur le substrat dans l'écartement pour développer l'adhérence, refroidi par le cylindre refroidisseur et solidifié. Le substrat qui est déroulé d'un cylindre peut être traité à la flamme, traité par un procédé corona ou apprêté avant de rentrer dans l'écartement où il est revêtu par le flux de masse fondue. Les vitesses typiques des conduites se situent entre 100 et 300 m/min (mètre par minute).

### EXEMPLES DE REALISATION :

Les structures sont réalisées en extrusion couchage ou lamination sur une ligne laboratoire COLLIN.

L'adhésion des liants est évaluée lors d'un test de pelage à 200 mm/min (millimètre par minute) sur un dynamomètre Synergie 200H équipé d'une cellule de force de 100 N (Newton).
Encre 1 = Blanc
Encre 2 = Rouge 1
Encre 3 = Vert 1
Encre 4 = Bleu
Encre 5 = Rouge 2 (différente nature que l'encre 2)
Encre 6 = Vert 2 (différente nature que l'encre 3)

Des liants ou résines de compositions différentes (dont les caractéristiques globales sont précisées dans le tableau ci-dessous) ont été utilisés dans les différents exemples.

| Référence | Nature du liant | Acrylate (%poids de la composition) | MAH (anhydride maléique, % poids de la composition) | MFI |
|---|---|---|---|---|
| Résine 1 | EMA autoclave | 24 | 0 | 7 |
| Résine 2 | EMA tubulaire | 24 | 0 | 5,4 |
| Résine 3 | Terpolymère autoclave | 20 | 0,3 | 8 |
| Résine 4 | Terpolymère tubulaire | 25 | 0,3 | 7,3 |
| Résine 5 | Mélange (SA) | 23 | 0,3 | 6 |
| Résine 6 | Mélange (AA) | 23 | 0,3 | 6 |

Le MFI (Melt Flow Index) a été effectué à l'aide d'un plastomètre à extrusion à poids selon la Normes ISO 1133, à une température de 190°C et sous un poids de 2,16 kg. Le résultat est exprimé en grammes/10 minutes.

Les résines 1 et 2 (EMA) sont des copolymères d'éthylène et d'acrylate de méthyle obtenus par copolymérisation radicalaire haute pression continue, respectivement selon un procédé autoclave à une température de 205°C et une pression de 1690 bars (1) et tubulaire (2) à une température de 230°C et une pression de 2500 bars.

La résine 3 est un terpolymère d'éthylène, d'acrylate de méthyle et d'anhydride maléique obtenu par copolymérisation radicalaire haute pression (continue) selon un procédé autoclave à une température de 205°C et une pression de 1690 bars.

La résine 4 est un terpolymère d'éthylène, d'acrylate de méthyle et d'anhydride maléique obtenu par copolymérisation radicalaire haute pression (continue) selon un procédé tubulaire à une température de 205°C et une pression de 2200 bars.

Les résines 5 et 6 sont obtenues par mélange sur une extrudeuse d'un copolymère d'éthylène et d'acrylate de méthyle obtenu par polymérisation radicalaire haute pression (continue) selon un procédé tubulaire à une température de 230°C et une pression de 2500 bars et d'un terpolymère d'éthylène, d'acrylate de méthyle et d'anhydride maléique obtenu par polymérisation radicalaire haute pression autoclave (à une température de 205°C et une pression de 1690 bars).

La résine 6 (notée AA), contrairement à la résine 5 (notée SA) comprend en outre un mélange d'additifs pour la processabilité (éviter collage sur le « chill roll »).

Les résines 4, 5 et 6 sont les résines selon l'invention.

Dans la suite, le « liant » désigne la composition testée, principalement en adhésion.

### Exemple 1

Cet exemple montre que sur un support métallisé, l'anhydride maléique du terpolymère est primordial pour obtenir de l'adhésion et que le terpolymère tubulaire est plus performant que le terpolymère autoclave (Haute Pression).
Structure= VmPET/ liant/ LDPE (12µm / 10µm / 30µm)
LDPE : polyéthylène à basse densité
VmPET : film PET métallisé sous vide
EMA : éthylène méthacrylate

| Liant | VmPET/ liant/ LDPE à 290°C Force de pelage (N/15mm) après 8 jours |
|---|---|
| Résine 1 | < 0,5 |
| Résine 2 | < 0,5 |
| Résine 3 | 1,5 |
| Résine 4 | 1,5 |
| Résine 5 | 2,5 |

### Exemple 2

Cet exemple montre l'amélioration de l'adhésion obtenue sur l'encre 1 en utilisant un EMA Tubulaire/ EMA Autoclave (comparaison EMA tubulaire par rapport à un EMA autoclave) ainsi qu'en utilisant un terpolymère/EMA et de façon plus spectaculaire en utilisant un terpolymère issu d'une polymérisation haute pression (HP) Tubulaire/ autres liants.

Structure = OPET / encre/ liant/ LDPE (12 µm/ 1µm /10µm / 30µm)

| Liant | OPET/encre 1/liant/LDPE à 295°C Force de pelage (N/15mm) après 30 jours |
|---|---|
| Résine 1 | 1,6 |
| Résine 2 | 2,5 |
| Résine 3 | 2,5 |
| Résine 4 | 3,1 |
| Résine 5 | 3,1 |

### Exemple 3

Cet exemple montre l'amélioration de l'adhésion obtenue sur OPET en utilisant un Terpolymère/ EMA Tubulaire et de façon plus spectaculaire en utilisant un Terpolymère d'une polymérisation HP Tubulaire/ autres liants.

Structure = OPET / liant / LDPE (12 µm/ 10µm / 30µm)

| Liant | OPET/ liant/LDPE à 290°C Force de pelage (N/15mm) | |
|---|---|---|
| | t₀ | t₀ + 8j (jours) |
| Résine 2 | 3,2 | 3,9 |
| Résine 3 | 2,2 | 4,6 |
| Résine 6 | 3,9 | 6 |

### Exemple 4

Cet exemple montre l'amélioration de l'adhésion obtenue sur les encres 2 & 3 en utilisant un Terpolymère / EMA Tubulaire et de façon plus spectaculaire en utilisant un Terpolymère d'une polymérisation HP Tubulaire/ autres liants.

Structure = OPET / encre/ liant/ LDPE (12 µm/ 1µm /10µm / 30µm)

| Liant | OPET/ encre 2 / liant / LDPE 290°C | | OPET/ encre 3 / liant / LDPE 290°C | |
|---|---|---|---|---|
| | t₀ | t₀+8j | t₀ | t₀+8j |
| Résine 2 | 2,3 | 1,7 | 2,8 | 2 |
| Résine 3 | 1,5 | 2,7 | 1,7 | 2,6 |
| Résine 5 | 3,4 | 3,7 | 3,1 | 3,3 |

### Exemple 5

Cet exemple montre à nouveau l'intérêt d'un terpolymère Tubulaire par rapport à un EMA pour l'adhésion sur encre mais cette fois-ci avec un support BOPP (« Biaxially Oriented PolyPropylene »).

Structure = BOPP / encre/ liant/ LDPE (20 µm/ 1µm /10µm / 50µm)

| Liant | BOPP/ encre 4/liant/LDPE à 290°C Force de pelage (N/15mm) | |
|---|---|---|
| | t₀ | t₀+8j |
| Résine 2 | 2,9 | 2 |
| Résine 6 | 3,4 | 2,7 |

### Exemple 6

Cet exemple démontre l'amélioration de l'adhésion et l'ultraversatilité de la formulation selon l'invention. En effet, elle permet d'associer en extrusion lamination différents substrats de natures très différentes que ne permettent pas les EMA. Elle permet aussi d'obtenir des forces de pelage plus élevées sur encre que la version classique des terpolymère obtenus avec un procédé autoclave.

Structures :
1 : OPET/liant/Alu (12µm/20µm/37µm)
2 : OPET/liant/VmPET (12µm/20µm/12µm)
3: BOPP /encre 5/ liant/ vmPET (20µm /1 µm/20µm/12µm)

| liant | OPET/liant/Al u 12/20/37µm à 310°C Force de pelage (N/15mm) (rupture à l'interface liant/alu) | | OPET/liant/vmPE T 12/20/12µm à 310°C Force de pelage (N/15mm) (rupture à l'interface liant/vmPET) | | BOPP /encre 5/ liant/ vmPET 20/20/12µm à 310°C Force de pelage (N/15mm) | |
|---|---|---|---|---|---|---|
| | t₀ | t₀+8j | t₀ | t₀+8j | t₀ | t₀+8j |
| Résine 3 | 7,9 | 9,2 | 6 | 9 | 0,3 (encre//liant) | 0,4 (encre//liant) |
| Résine 6 | 6 | 5,7 | 5 | 6,6 | inarmorçable car force trop élevée | |
| Résine 1 ou 2 | 0,7 | 0,5 | 0,4 | 0,3 | 0,5 (liant/VmPET) | 0,6 (liant/VmPET) |

### Exemple 7

Cet exemple montre l'amélioration de l'adhésion obtenue avec notre nouvelle formulation / à celle obtenue avec la formulation classique à « basse » température.

Structure :
Tissé PP/ PP+LDPE/liant/encre 6 / BOPP (100µm/15µm/1µm/5µm/20µm)

| Liant | Tissé PP/ PP+LDPE/liant/encre 6 / BOPP (100/15/5/20µm) | | | | | |
|---|---|---|---|---|---|---|
| | 290°C | | | 320°C | | |
| | t0 | t>30jours | interface | t0 | t>30jours | interface |
| Résine 3 | 1,6 | 2 | Liant// encre | 3,5 | 3 | Tissé PP // PP+LDPE |
| Résine 6 | 2,1 | 4,9 | Tissé PP // PP+LDPE | 3,5 | 3,2 | Tissé PP // PP+LDPE |

## Revendications

1. Composition adhésive comprenant au moins un premier copolymère, lequel premier copolymère comprend, ou est constitué de :
- comonomères éthylène, et
- comonomères de type ester d'acides carboxyliques insaturés, et éventuellement
- comonomères fonctionnels comprenant au moins une fonction réactive sélectionnée dans le groupe constitué d'une fonction acide, d'une fonction anhydride ou d'une fonction époxyde,
ladite composition comprenant entre 5% et 25% en poids desdits comonomères de type ester d'acides carboxyliques insaturés par rapport au poids de ladite composition et, lorsque les comonomères fonctionnels sont présents, moins de 2% en poids des comonomères fonctionnels par rapport au poids de ladite composition,
et dans laquelle, le premier copolymère est obtenu par copolymérisation dans un réacteur tubulaire haute pression continue.

2. Composition adhésive selon la revendication 1, dans laquelle le premier copolymère, comprend, ou est constitué de :
- comonomères éthylène, et
- comonomères de type ester d'acides carboxyliques insaturés, et
- comonomères fonctionnels comprenant au moins une fonction réactive sélectionnée dans le groupe constitué d'une fonction acide, d'une fonction anhydride ou d'une fonction époxyde.

3. Composition adhésive selon la revendication 1 ou 2, comprenant au moins un deuxième copolymère mélangé au premier copolymère, lequel deuxième copolymère comprend, ou est constitué de :
- comonomères éthylène, et
- comonomères de type ester d'acides carboxyliques insaturés, et
- comonomères fonctionnels comprenant au moins une fonction réactive sélectionnée dans le groupe constitué d'une fonction acide, d'une fonction anhydride ou d'une fonction époxyde.

4. Composition adhésive selon l'une quelconque des revendications précédentes, comprenant moins de 1% en poids de comonomères fonctionnels, de préférence de 0,05% à 0,9% en poids de comonomères fonctionnels, et encore préférentiellement de 0,15% à 0,6% en poids de comonomères fonctionnels par rapport au poids de ladite composition.

5. Composition adhésive selon l'une quelconque des revendications précédentes, dans laquelle les comonomères de type ester d'acides carboxyliques insaturés sont choisis dans le groupe constitué par : les acrylates d'alkyle et les méthacrylates d'alkyle, le groupe alkyle comprenant de 1 à 24 atomes de carbone.

6. Composition adhésive selon l'une quelconque des revendications précédentes, dans laquelle les comonomères fonctionnels sont de l'anhydride maléique.

7. Composition adhésive selon l'une quelconque des revendications précédentes, comprenant de 0,15% à 0,6% en poids de comonomères fonctionnels constitués de l'anhydride maléique par rapport au poids de ladite composition.

8. Composition adhésive selon l'une quelconque des revendications précédentes, comprenant de 10% à 25%, de préférence 15% à 25% en poids de comonomères de type ester d'acides carboxyliques insaturés par rapport au poids de ladite composition, lesdits comonomères de type ester d'acides carboxyliques insaturés étant choisis dans le groupe constitué par : les acrylates d'alkyle et les méthacrylates d'alkyle, le groupe alkyle comprenant de 1 à 24 atomes de carbone.

9. Procédé de préparation d'une composition adhésive selon l'une des revendications 1 à 8, comprenant au moins une étape a) de copolymérisation dans un réacteur tubulaire haute pression continue de :
- comonomères éthylène, et
- comonomères de type ester d'acides carboxyliques insaturés, et éventuellement
- comonomères fonctionnels comprenant au moins une fonction réactive sélectionnée dans le groupe constitué d'une fonction acide, d'une fonction anhydride ou d'une fonction époxyde.

10. Procédé selon la revendication 9, comprenant en outre une étape b) de copolymérisation d'un deuxième copolymère, de préférence par voie radicalaire haute pression continue, de :
- comonomères éthylène, et
- comonomères de type ester d'acides carboxyliques insaturés, et
- comonomères fonctionnels, lesdits comonomères fonctionnels comprenant au moins une fonction réactive sélectionnée dans le groupe constitué d'une fonction acide, d'une fonction anhydride ou d'une fonction époxyde.

11. Procédé selon l'une quelconque des revendications 9 ou 10, dans lequel lorsque les comonomères fonctionnels sont présents, moins de 2% en poids des comonomères fonctionnels par rapport au poids total desdits monomères sont polymérisés.

12. Procédé selon l'une quelconque des revendications 9 à 11, comprenant en outre une étape de mélange par extrusion dudit premier copolymère et éventuellement dudit deuxième copolymère.

13. Utilisation d'une composition adhésive comprenant au moins un premier copolymère, lequel premier copolymère comprend, ou est constitué de :
- comonomères éthylène, et
- comonomères de type ester d'acides carboxyliques insaturés, et éventuellement
- comonomères fonctionnels comprenant au moins une fonction réactive sélectionnée dans le groupe constitué d'une fonction acide, d'une fonction anhydride ou d'une fonction époxyde,
ladite composition comprenant au moins 5% en poids desdits comonomères de type ester d'acides carboxyliques insaturés par rapport au poids de ladite composition et, lorsque les comonomères fonctionnels sont présents, moins de 2% en poids des comonomères fonctionnels par rapport au poids de ladite composition,
et dans laquelle, le premier copolymère est obtenu par copolymérisation dans un réacteur tubulaire haute pression continue
pour la préparation d'une structure multicouche, ladite structure multicouche comprenant de préférence au moins une couche d'un support, ledit support étant de préférence sélectionné dans le groupe constitué d'aluminium, de papier, de carton, de cellophane, de films à base de résines polyéthylène, polypropylène, polyamide, polyester, chlorure de polyvinyle (PVC), chlorure de polyvinylidène (PVDC) et polyacrylonitryle (PAN), ces films étant orientés ou non, métallisés ou non, imprimés ou non, traités ou non par voie physique ou chimique, et de films revêtus d'une fine couche barrière inorganique, tels que le polyester (PET SiOx ou AlOx).

14. Structure multicouche comprenant :
- au moins une couche d'une composition adhésive comprenant au moins un premier copolymère, lequel premier copolymère comprend, ou est constitué de :
- comonomères éthylène, et
- comonomères de type ester d'acides carboxyliques insaturés, et éventuellement
- comonomères fonctionnels comprenant au moins une fonction réactive sélectionnée dans le groupe constitué d'une fonction acide, d'une fonction anhydride ou d'une fonction époxyde,
ladite composition comprenant au moins 5% en poids desdits comonomères de type ester d'acides carboxyliques insaturés par rapport au poids de ladite composition et, lorsque les comonomères fonctionnels sont présents, moins de 2% en poids des comonomères fonctionnels par rapport au poids de ladite composition,
et dans laquelle, le premier copolymère est obtenu par copolymérisation dans un réacteur tubulaire haute pression continue, et
- au moins une couche d'un support, ledit support étant de préférence sélectionné dans le groupe constitué d'aluminium, de papier, de carton, de cellophane, de films à base de résines polyéthylène, polypropylène, polyamide, polyester, chlorure de polyvinyle (PVC), chlorure de polyvinylidène (PVDC) et polyacrylonitryle (PAN), ces films étant orientés ou non, métallisés ou non, imprimés ou non, traités ou non par voie physique ou chimique, et de films revêtus d'une fine couche barrière inorganique, tels que le polyester (PET SiOx ou AlOx).

## Patentansprüche

1. Klebstoffzusammensetzung, umfassend mindestens ein erstes Copolymer, wobei das erste Copolymer umfasst oder besteht aus:
- Ethylencomonomeren, und
- Comonomeren vom Typ ungesättigte Carbonsäureester, und eventuell
- funktionelle Comonomere, umfassend mindestens eine reaktive Funktion, ausgewählt aus der Gruppe, bestehend aus einer Säurefunktion, einer Anhydridfunktion oder einer Epoxidfunktion,
wobei die Zusammensetzung zwischen 5 Gew% und 25 Gew% der Comonomere vom Typ ungesättigte Carbonsäureester mit Bezug auf das Gewicht der Zusammensetzung und, wenn die funktionellen Comonomere vorhanden sind, weniger als 2 Gew% der funktionellen Comonomere mit Bezug auf das Gewicht der Zusammensetzung umfasst,
und wobei das erste Copolymer durch Copolymerisierung in einem Rohrreaktor mit konstantem Überdruck erhalten wird.

2. Klebstoffzusammensetzung nach Anspruch 1, wobei das erste Copolymer umfasst oder besteht aus:
- Ethylencomonomeren, und
- Comonomeren vom Typ ungesättigte Carbonsäureester, und
- funktionellen Comonomeren, umfassend mindestens eine reaktive Funktion, ausgewählt aus der Gruppe, bestehend aus einer Säurefunktion, einer Anhydridfunktion oder einer Epoxidfunktion.

3. Klebstoffzusammensetzung nach Anspruch 1 oder 2, umfassend mindestens ein zweites Copolymer, gemischt mit dem ersten Copolymer, wobei das zweite Copolymer umfasst oder besteht aus:
- Ethylencomonomeren, und
- Comonomeren vom Typ ungesättigte Carbonsäureester, und
- funktionellen Comonomeren, umfassend mindestens eine reaktive Funktion, ausgewählt aus der Gruppe, bestehend aus einer Säurefunktion, einer Anhydridfunktion oder einer Epoxidfunktion.

4. Klebstoffzusammensetzung nach einem der vorhergehenden Ansprüche, umfassend weniger als 1 Gew% funktionelle Comonomere, vorzugsweise von 0,05 Gew% bis 0,9 Gew% funktionelle Comonomere und noch bevorzugter von 0,15 Gew% bis 0,6 Gew% funktionelle Comonomere mit Bezug auf das Gewicht der Zusammensetzung.

5. Klebstoffzusammensetzung nach einem der vorhergehenden Ansprüche, wobei die Comonomere vom Typ ungesättigte Carbonsäureester ausgewählt sind aus der Gruppe, bestehend aus: Alkylacrylaten und Alkylmethacrylaten, wobei die Alkylgruppe von 1 bis 24 Kohlenstoffatome umfasst.

6. Klebstoffzusammensetzung nach einem der vorhergehenden Ansprüche, wobei die funktionellen Comonomere Meleinsäureanhydrid sind.

7. Klebstoffzusammensetzung nach einem der vorhergehenden Ansprüche, umfassend von 0,15 Gew% bis 0,6 Gew% funktionelle Comonomere, bestehend aus Meleinsäureanhydrid mit Bezug auf das Gewicht der Zusammensetzung.

8. Klebstoffzusammensetzung nach einem der vorhergehenden Ansprüche, umfassend von 10 Gew% bis 25 Gew%, vorzugsweise 15 Gew% bis 25 Gew% Comonomere vom Typ ungesättigte Carbonsäureester mit Bezug auf das Gewicht der Zusammensetzung, wobei die Comonomere vom Typ ungesättigte Cabonsäureester ausgewählt sind aus der Gruppe, bestehend aus: Alkylacrylaten und Alkylmethacrylaten, wobei die Alkylgruppe von 1 bis 24 Kohlenstoffatome umfasst.

9. Verfahren zur Herstellung einer Klebstoffzusammensetzung nach einem der Ansprüche 1 bis 8, umfassend mindestens einen Schritt a) des Copolymerisierens in einem Rohrreaktor mit konstantem Überdruck von:
- Ethylencomonomeren, und
- Comonomeren vom Typ ungesättigte Cabonsäureester und eventuell
- funktionellen Comonomeren, umfassend mindestens eine reaktive Funktion, ausgewählt aus der Gruppe, bestehend aus einer Säurefunktion, einer Anhydridfunktion oder einer Epoxidfunktion.

10. Verfahren nach Anspruch 9, umfassend außerdem einen Schritt b) des Copolymerisierens eines zweiten Copolymers, vorzugsweise radikalisch mit konstantem Hochdruck von:
- Ethylencomonomeren, und
- Comonomeren vom Typ ungesättigte Cabonsäureester, und
- funktionellen Comonomeren, wobei die funktionellen Comonomere mindestens eine reaktive Funktion umfassen, ausgewählt aus der Gruppe, bestehend aus einer Säurefunktion, einer Anhydridfunktion oder einer Epoxidfunktion.

11. Verfahren nach einem der Ansprüche 9 oder 10, wobei, wenn die funktionellen Comonomere vorhanden sind, weniger als 2 Gew% der funktionellen Comonomere mit Bezug auf das Gesamtgewicht der Monomere polymerisiert sind.

12. Verfahren nach einem der Ansprüche 9 bis 11, umfassend außerdem einen Schritt des Mischens durch Extrusion des ersten Copolymers und eventuell des zweiten Copolymers.

13. Verwendung einer Klebstoffzusammensetzung, umfassend mindestens ein erstes Copolymer, wobei das erste Copolymer umfasst oder besteht aus:
- Ethylencomonomeren, und
- Comonomeren vom Typ ungesättigte Cabonsäureester, und eventuell
- funktionellen Comonomeren, umfassend mindestens eine reaktive Funktion, ausgewählt aus der Gruppe, bestehend aus einer Säurefunktion, einer Anhydridfunktion oder einer Epoxidfunktion,
wobei die Zusammensetzung mindestens 5 Gew% der Comonomere vom Typ ungesättigte Cabonsäureester mit Bezug auf das Gewicht der Zusammensetzung umfasst und, wenn die funktionellen Comonomere vorhanden sind, weniger als 2 Gew% der funktionellen Comonomere mit Bezug auf das Gewicht der Zusammensetzung,
und wobei das erste Copolymer durch Copolymerisierung in einem Rohrreaktor mit konstantem Überdruck erhalten wird ,
für die Herstellung einer mehrschichtigen Struktur, wobei die mehrschichtige Struktur vorzugsweise mindestens eine Schicht einer Stütze umfasst, wobei die Stütze vorzugsweise ausgewählt ist aus der Gruppe, bestehend aus Aluminium, Papier, Karton, Cellophan, Folien auf der Grundlage von Polyethylen-, Polypropylen-, Polyamid-, Polyester-, Polyvinylchlorid (PVC)-, Polyvinylidenchlorid (PVDC)- und Polyacrylonitryl (PAN)-Harzen, wobei diese Folien ausgerichtet oder nicht, metallisiert oder nicht, bedruckt oder nicht, auf physische oder chemische Weise behandelt oder nicht sind, und Folien, die beschichtet mit einer dünnen anorganischen Barriereschicht wie z. B. Polyester (PET SiOx oder AlOx) sind.

14. Mehrschichtige Struktur, umfassend:
- mindestens eine Schicht einer Klebstoffzusammensetzung, umfassend mindestens ein erstes Copolymer, wobei das erste Copolymer umfasst oder besteht aus:
- Ethylencomonomeren, und
- Comonomeren vom Typ ungesättigte Cabonsäureester, und eventuell:
- funktionellen Comonomeren, umfassend mindestens eine reaktive Funktion, ausgewählt aus der Gruppe, bestehend aus einer Säurefunktion, einer Anhydridfunktion oder einer Epoxidfunktion,
- wobei die Zusammensetzung mindestens 5 Gew% der Comonomere vom Typ ungesättigte Cabonsäureester mit Bezug auf das Gewicht der Zusammensetzung umfasst, und wenn die funktionellen Comonomere vorhanden sind, weniger als 2 Gew% der funktionellen Comonomere mit Bezug auf das Gewicht der Zusammensetzung umfasst,
- und wobei das erste Copolymer durch Copolymerisierung in einem Rohrreaktor mit konstantem Überdruck erhalten wird, und
- mindestens eine Stützschicht, wobei die Stütze vorzugsweise ausgewählt ist aus der Gruppe, bestehend aus Aluminium, Papier, Karton, Cellophan, Folien auf der Grundlage von Polyethylen-, Polypropylen-, Polyamid-, Polyester-, Polyvinylchlorid (PVC)-, Polyvinylidenchlorid (PVDC)- und Polyacrylonitryl (PAN)-Harzen, wobei diese Folien ausgerichtet oder nicht, metallisiert oder nicht, bedruckt oder nicht, auf physische oder chemische Weise behandelt oder nicht sind, und Folien, die beschichtet mit einer dünnen anorganischen Barriereschicht wie z. B. Polyester (PET SiOx oder AlOx) sind.

## Claims

1. An adhesive composition comprising at least one first copolymer, which first copolymer comprises or is constituted of:
- ethylene comonomers, and
- unsaturated carboxylic acid ester type comonomers, and optionally
- functional comonomers comprising at least one reactive function selected from the group consisting of an acid function, an anhydride function or an epoxide function,
said composition comprising between 5% and 25 % by weight of said unsaturated carboxylic acid ester type comonomers relative to the weight of said composition and, when the functional comonomers are present, less than 2% by weight of the functional comonomers relative to the weight of said composition, and
wherein the first copolymer is obtained by continuous high-pressure copolymerization in a tubular reactor.

2. The adhesive composition according to claim 1, wherein the first copolymer comprises or is constituted of:
- ethylene comonomers, and
- unsaturated carboxylic acid ester type comonomers, and
- functional comonomers comprising at least one reactive function selected from the group consisting of an acid function, an anhydride function or an epoxide function.

3. The adhesive composition according to claim 1 or 2, comprising at least one second copolymer blended with the first copolymer, which second copolymer comprises or is constituted of:
- ethylene comonomers, and
- unsaturated carboxylic acid ester type comonomers, and
- functional comonomers comprising at least one reactive function selected from the group consisting of an acid function, an anhydride function or an epoxide function.

4. The adhesive composition according to any one of the preceding claims, comprising less than 1 % by weight of functional comonomers, preferably from 0.05 % to 0.9 % by weight of functional comonomers, and more preferably from 0.15 % to 0.6 % by weight of functional comonomers relative to the weight of said composition.

5. The adhesive composition according to any one of the preceding claims, wherein the unsaturated carboxylic acid ester type comonomers are selected from the group consisting of: alkyl acrylates and alkyl methacrylates, the alkyl group comprising from 1 to 24 carbon atoms.

6. The adhesive composition according to any one of the preceding claims, wherein the functional comonomers are maleic anhydride.

7. The adhesive composition according to any one of the preceding claims, comprising from 0.15% to 0.6% by weight of functional comonomers consisting of maleic anhydride relative to the weight of said composition.

8. The adhesive composition according to any one of the preceding claims, comprising from 10% to 25%, preferably from 15% to 25% by weight of unsaturated carboxylic acid ester type comonomers relative to the weight of said composition, said unsaturated carboxylic acid ester type comonomers being selected from the group consisting of: alkyl acrylates and alkyl methacrylates, the alkyl group comprising from 1 to 24 carbon atoms.

9. A process for preparing an adhesive composition according to any one of claims 1 to 8, comprising at least one step a) of copolymerization in a continuous high-pressure tubular reactor of:
- ethylene comonomers, and
- unsaturated carboxylic acid ester type comonomers, and optionally
- functional comonomers comprising at least one reactive function selected from the group consisting of an acid function, an anhydride function or an epoxide function.

10. The process according to claim 9, additionally comprising a step b) of copolymerization of a second copolymer, preferably by continuous high pressure radical route, of:
- ethylene comonomers, and
- unsaturated carboxylic acid ester type comonomers, and
- functional comonomers, said functional comonomers comprising at least one reactive function selected from the group consisting of an acid function, an anhydride function or an epoxide function.

11. The process according to any one of claims 9 or 10, wherein when the functional comonomers are present, less than 2% by weight of the functional comonomers relative to the total weight of said monomers are polymerized.

12. The process according to any one of claims 9 to 11, additionally comprising a step of blending said first copolymer and optionally said second copolymer by extrusion.

13. The use of an adhesive composition comprising at least one first copolymer, which first copolymer comprises or is constituted of:
- ethylene comonomers, and
- unsaturated carboxylic acid ester type comonomers, and optionally
- functional comonomers comprising at least one reactive function selected from the group consisting of an acid function, an anhydride function or an epoxide function,
said composition comprising at least 5% by weight of said unsaturated carboxylic acid ester type comonomers relative to the weight of said composition and, when the functional comonomers are present, less than 2% by weight of the functional comonomers relative to the weight of said composition, and
wherein the first copolymer is obtained by continuous high-pressure copolymerization in a tubular reactor for the preparation of a multilayer structure, said multilayer structure preferably comprising at least one layer of a support, said support being selected from the group consisting of aluminum, paper, board, cellophane, films based on polyethylene, polypropylene, polyamide, polyester, polyvinyl chloride (PVC), polyvinylidene chloride (PVDC) and polyacrylonitrile (PAN) resins, these films being optionally oriented, optionally metalized, optionally printed, optionally treated by physical or chemical means, and films coated with a thin inorganic barrier layer, such as polyester (PET SiOx or AlOx).

14. A multilayer structure comprising:
- at least one layer of an adhesive composition comprising at least one first copolymer, which first copolymer comprises or is constituted of:
- ethylene comonomers, and
- unsaturated carboxylic acid ester type comonomers, and optionally
- functional comonomers comprising at least one reactive function selected from the group consisting of an acid function, an anhydride function or an epoxide function,
said composition comprising at least 5% by weight of said unsaturated carboxylic acid ester type comonomers relative to the weight of said composition and, when the functional comonomers are present, less than 2% by weight of the functional comonomers relative to the weight of said composition, and
wherein the first copolymer is obtained by continuous high-pressure copolymerization in a tubular reactor, and
- at least one layer of a support, said support being selected from the group consisting of aluminum, paper, board, cellophane, films based on polyethylene, polypropylene, polyamide, polyester, polyvinyl chloride (PVC), polyvinylidene chloride (PVDC) and polyacrylonitrile (PAN) resins, these films being optionally oriented, optionally metalized, optionally printed, optionally treated by physical or chemical means, and films coated with a thin inorganic barrier layer, such as polyester (PET SiOx or AlOx).
